# EUROPEAN PATENT APPLICATION

(11) **EP 0 544 055 A2**
(43) Date of publication of application: **02.06.1993**
(21) Application number: 92110394.1
(22) Date of filing: 19.06.1992
(51) Int. Cl.: H04N 9/79, H04N 9/87

(54) **Apparatus for reproducing high definition color video signal**

(30) Priority: 27.11.1991 JP 312682/91
(71) Applicant: PIONEER ELECTRONIC CORPORATION, Meguro-ku Tokyo 153 (JP)
(72) Inventor: Tozaki, Akihiro, Tokorozawa-City, Saitama (JP)
(74) Representative: Goddar, Heinz J., Dr.

(57) **Abstract**

Disclosed is a reproducing apparatus which plays a recording medium on which a color video signal is recorded as three channel signals acquired by expanding time axes of one luminance signal and two color difference signals representing the color video signal and combining the expanded luminance signal and the expanded color difference signals in a predetermined format while subjecting the color difference signals to a line-sequential process, and which can clear disturbance on a reproduced image in a short period of time when the mode changes to a normal playback mode from a special playback mode. After the reproduced channel signal is written in a memory, write and read timings at the reading time are monitored while performing reverse conversion to the signal conversion done at the time of producing the channel signal, thereby keeping the phase difference between write and read timing signals constant.

## Description

### Background of the Invention

### 1. Field of the Invention

The present invention relates to an apparatus for reproducing a high definition color video signal.

### 2. Description of the Related Art

A high definition video signal called "high vision signal", for example, consists of 1125 horizontal scan lines (hereinafter referred to as "H lines") per frame, and is distributed over a frequency range of about 30 MHz; this type of video signal will be hereinafter called "high vision signal". Such a broad-band high vision signal cannot directly be recorded on an existing optical disk with a narrow-band of, for example, about 6 MHz. In this respect, digital measures such as the MUSE system may be taken to increase the recording density of a band-compressed disk.

A high vision signal recording/reproducing system which utilizes an existing disk player as much as possible has been proposed in Japanese Patent Application No. 2-143589 by the present applicant.

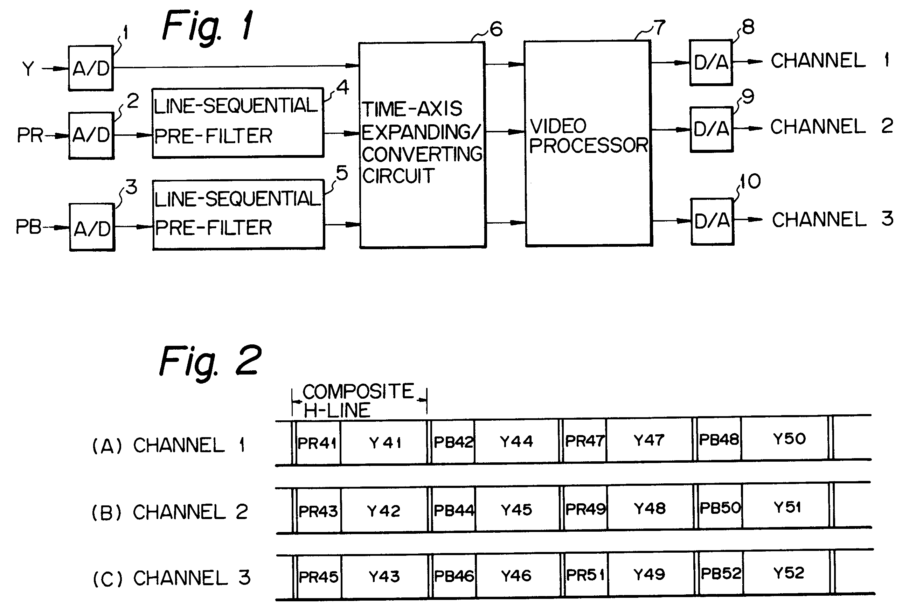

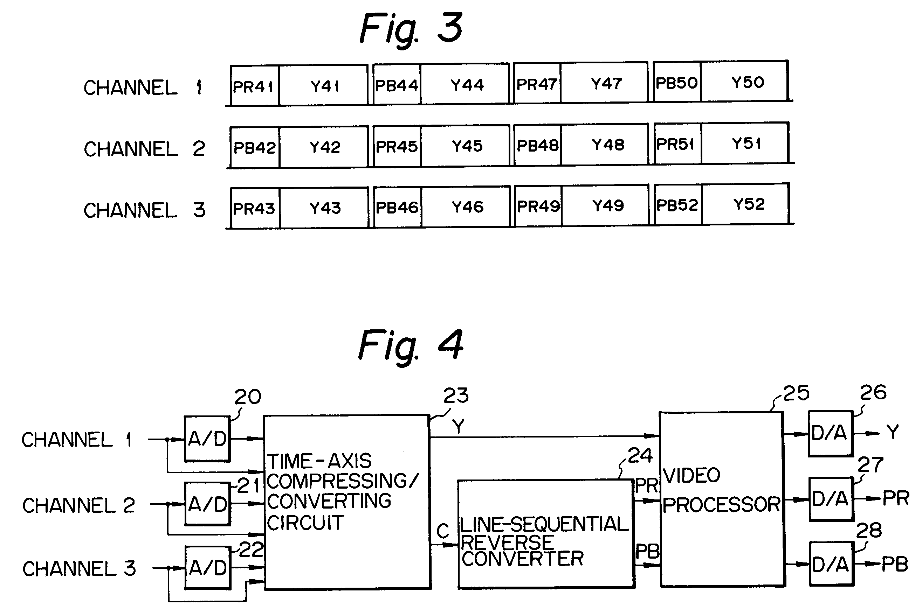

In the apparatus disclosed in this Japanese Patent Application No. 2-143589, a transmitting device as shown in Fig. 1 converts a luminance signal Y and color difference signals PR and PB into three channel signals before its transmission or recording. That is, the luminance signal Y and color difference signals PR and PB as input signals are converted into digital signals each consisting of, for example, eight bits, by A/D converters 1, 2 and 3. The color difference signals PR and PB are subjected to band limitation in the vertical direction of the screen by line-sequential pre-filters 4 and 5. The resulting three digital signals are expanded along the time axis and time axes are also converted by a time-axis expanding/converting circuit 6 in such a way that, of the six consecutive intervals of the luminance signal Y, the first three H intervals and the second three H intervals are distributed to three channels and the odd-numbered H intervals of the color difference signal PR and the even-numbered H intervals of the color difference signal PB are likewise distributed to three channels, thus yielding three channel signals. A video processor 7 adds a sync signal to each of those three composite signals, providing three channel signals consisting of composite H lines with the structure shown in Fig. 2. The channel signals are then converted into analog signals by D/A converters 8, 9 and 10 and are then recorded on separate optical disks, for example. Those analog signals may of course be recorded on three separate tracks on a single disk. The present applicant has also proposed a system of using the same original line number for the luminance signal and color difference signal included in a single composite H line of each channel signal as shown in Fig. 3.

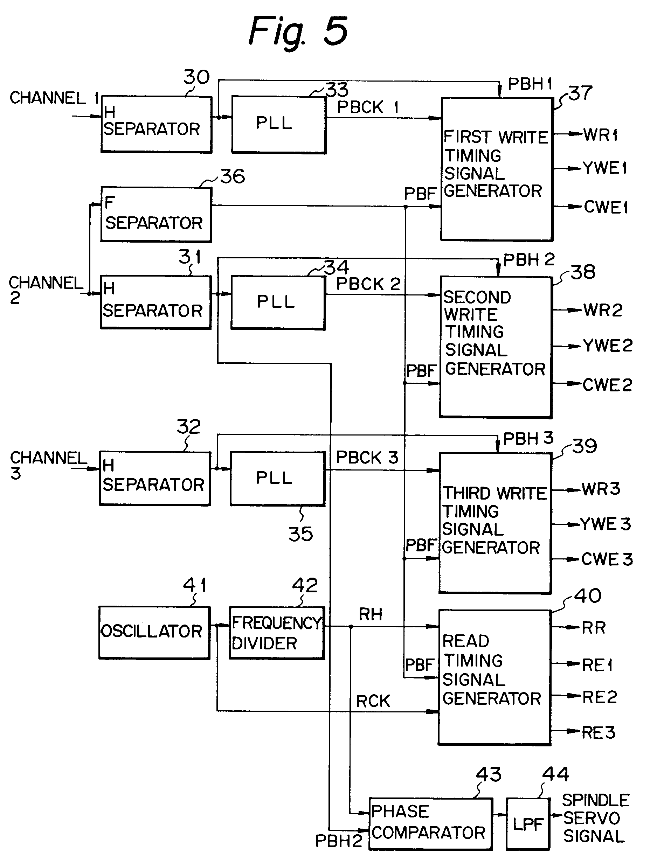

The three channel signals recorded on recording media or a single recording medium in the above manner are reproduced by a disk player (not shown) and are then supplied to a reproducing apparatus as shown in Fig. 4. In this reproducing apparatus, after digitized by A/D converters 20, 21 and 22, the input channel signals are sent to a time-axis compressing/converting circuit 23, providing a luminance signal Y and a color signal C. The color signal C is sent to a line-sequential reverse converter 24, which in turn produces color difference signals PR and PB. The acquired color difference signals PR and PB are processed together with the luminance signal Y in a video processor 25, and the resultant signals are subjected to D/A conversion in D/A converters 26, 27 and 28, restoring the original luminance signal Y and the original color difference signals PR and PB.

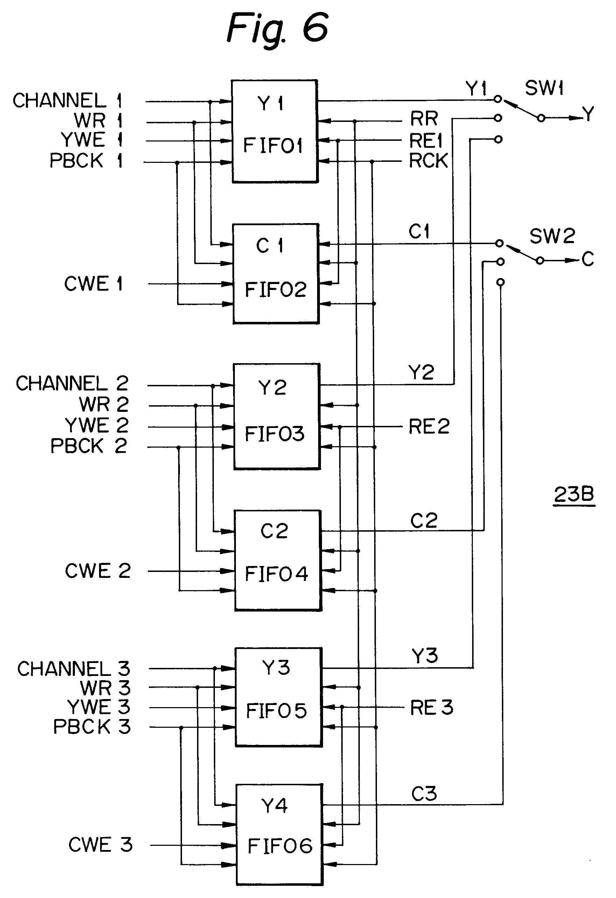

An example of the time-axis compressing/converting circuit 23 on the reproduction side is illustrated in Figs. 5 and 6.

The time-axis compressing/converting circuit shown in Figs. 5 and 6 comprises a timing signal generating section 23A in Fig. 5 and a memory section 23B (shown in Fig. 6), which stores a channel 1 signal, a channel 2 signal and a channel 3 signal in accordance with timing signals generated by the timing signal generating section 23A and outputs the stored signals later.

In the timing signal generating section 23A, horizontal sync signal separators 30, 31 and 32 respectively separate playback horizontal sync signals PBH1, PBH2 and PBH3 from the read channel 1, 2 and 3 signals. PLL circuits 33, 34 and 35 respectively produce playback clocks PBCK1, PBCK2 and PBCK3 based on the signals PBH1, PBH2 and PBH3. A frame sync signal separator 36 separates a frame sync signal PBF from the channel 2 signal. A first write timing signal generator 37 generates a write reset pulse WR1, a luminance-signal write enable signal YWE1 and a color-difference-signal write enable signal CWE1 based on the signals PBH1, PBCK1 and PBF. A second write timing signal generator 38 generates a write reset pulse WR2, a luminance-signal write enable signal YWE2 and a color-difference-signal write enable signal CWE2 based on the signals PBH2, PBCK2 and PBF.

A third write timing signal generator 39 generates a write reset pulse WR3, a luminance-signal write enable signal YWE3 and a color-difference-signal write enable signal CWE3 based on the signals PBH3, PBCK3 and PBF.

A read timing signal generator 40 generates a read reset pulse RR and read enable signals RE1, RE2 and RE3 in accordance with a reference clock RCK from an oscillator 41, a reference horizontal sync signal RH from a frequency divider 42, which frequency-divides the clock RCK, and the signal PBF.

A phase comparator 43 acquires a phase difference signal representing the phase difference between the signals PBH2 and RH. An LPF 44 produces the low-frequency component of this phase difference signal as a spindle servo signal. The spindle servo signal is supplied to a spindle servo circuit (not shown) which controls the rotational speed of a spindle motor that rotates a recording medium in the player. As a result, the rotation of the spindle motor is so controlled as to make the phase difference between the signals RH and PBH2 zero. The phase comparator 43 may be arranged to compare the signal RH with the signal PBH1 or PBH3.

The memory section 23B includes FIFOs 1, 2, 3, 4, 5 and 6 for storing the Y components and C components of the channel 1, 2 and 3 signals. The Y component of the channel 1 signal is input to the FIFO 1 for each composite H line in accordance with the signals WR1, YWE1 and PBCK1. The C component of the channel 1 signal is input to the FIFO 2 for each composite H line in accordance with the signals WR1, CWE1 and PBCK1. Likewise, the Y and C components of the channel 2 signal are input to the FIFOs 3 and 4 for each composite H line in accordance with the signals WR2, YWE2, PBCK2 and CWE2, while the Y and C components of the channel 3 signal are input to the FIFOs 5 and 6 for each composite H line in accordance with the signals WR3, YWE3, PBCK3 and CWE3.

The FIFOs 1 to 6 output the Y and C components in accordance with the signals RE1, RE2 and RE3 in response to the clock RCK, and reset the memory addresses in response to the pulse RR.

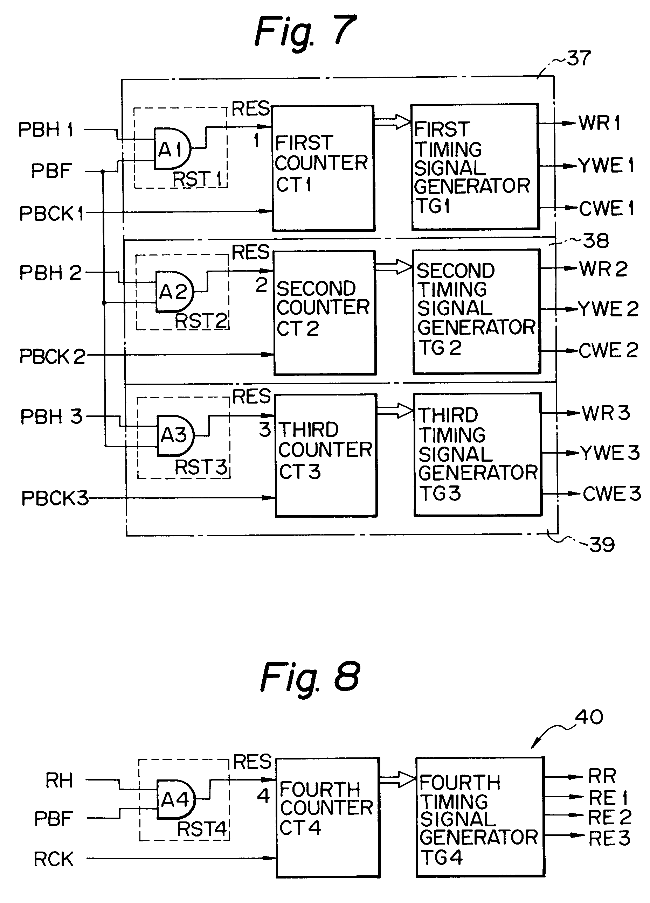

Figs. 7 and 8 exemplify the circuits which generate write and read timing signals to be supplied to the memory section 23B.

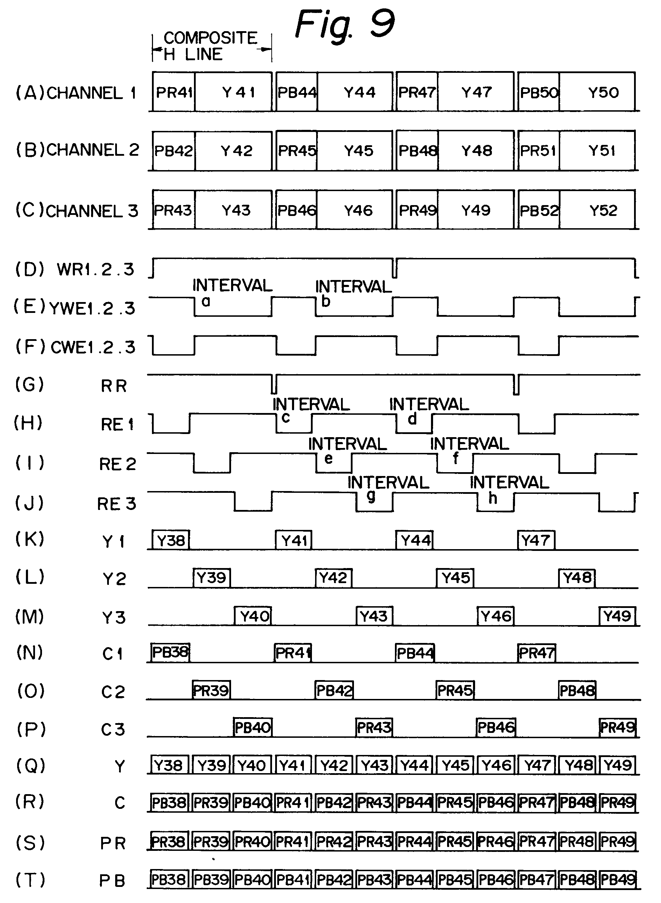

Fig. 7 illustrates specific examples of the first to third write timing signal generators 37, 38 and 39, and Fig. 8 a specific example of the read timing signal generator 40. The write timing signal generators 37 to 39 respectively include AND gates A1, A2 and A3, which respectively constitute reset pulse generators RST1, RST2 and RST3 for acquiring logical products of the signal PBF and the respective signals PBH1, PBH2 and PBH3 to produce reset pulses RES1, RES2 and RES3. First, second and third counters CT1, CT2 and CT3 count the clocks PBCK1, PBCK2 and PBCK3 with the depth corresponding to two composite H lines. The counters CT1, CT2 and CT3 clear themselves every time counting the clocks PBCK1, PBCK2 and PBCK3 corresponding to two composite H lines is completed, and their count values are always sent to first to third timing generators TG1, TG2 and TG3, respectively. When the first to third counters CT1, CT2 and CT3 are reset by the respective reset pulses RES1, RES2 and RES3, their count values become zero. The timing generator TG1 outputs the pulse WR1 and the signals YWE1 and CWE1. Likewise, the timing generator TG2 outputs the pulse and signals WR2, YWE2 and CWE2, and the timing generator TG3 the pulse and signals WR3, YWE3 and CWE3. The waveforms of those pulses and signals are shown in (D) to (F) in Fig. 9.

In the read timing signal generator 40, an AND gate A4, which constitutes a reset pulse generator RST4, obtains a logical product of the signals RH and PBF to produce a reset pulse RES4 and sends the pulse RES4 to the reset terminal of a fourth counter CT4. The fourth counter CT4 counts the clock RCK with the depth corresponding to two composite H lines. The counter CT4 clears itself every time counting the clock RCK corresponding to two composite H lines is completed, and its count value is always sent to a fourth timing generator TG4. The fourth timing generator TG4 produces the pulse RR and signals RE1, RE2 and RE3 as shown in (G) to (J) in Fig. 9 in accordance with the count value from the fourth counter CT4.

The operation of the circuit shown in Fig. 5 will be described below referring to Fig. 9. The channel 1 signal shown in (A) in Fig. 9 is supplied to the FIFOs 1 and 2, the channel 2 signal shown in (B) in Fig. 9 is supplied to the FIFOs 3 and 4, and the channel 3 signal shown in (C) in Fig. 9 is supplied to the FIFOs 5 and 6. The write reset signals WR1, WR2 and WR3, the Y-signal write enable signals YWE1, YWE2 and YWE3, the C-signal write enable signals CWE1, CWE2 and CWE3, and the playback clocks PBCK1, PBCK2 and PBCK3, all shown in (D), (E) and (F) in Fig. 9, are supplied to the associated terminals of the FIFOs 1, 3 and 5 and the FIFOs 2, 4 and 6. Further, the read reset pulse RR and read clock RCK are commonly supplied to the FIFOs 1 to 6. The read enable signal RE1 is supplied to the FIFOs 1 and 2, the read enable signal RE2 to the FIFOs 3 and 4, and the read enable signal RE3 to the FIFOs 5 and 6.

A signal Y41 is input to the FIFO 1 in an interval a of the signal YWE1 after the write address of that FIFO 1 is reset by the pulse WR1. Then, a signal Y44 is input to the FIFO 1 in an interval b of the signal YWE1. At this time, the signal is written at the write address and that write address is incremented, so that the signal Y41 is written at a relatively low address while the signal Y44 is written at a relatively high address. The read address for the FIFO 1 is reset by the read reset pulse RR ((G) in Fig. 9) lagging by 3H lines from the pulse WR1. The signal Y41 is read out in an interval c of the read enable signal RE1 ((H) in Fig. 9) that appears immediately after the pulse RR, and the signal Y44 is read out as a Y1 signal in an interval d (see (K) in Fig. 9).

Likewise, signals Y42 and Y45 are written in the FIFO 3, and signals Y43 and Y46 in the FIFO 5, at the intervals a and b of the signals YWE2 and YWE3, respectively, and the former two signals are read out as a Y2 signal ((L) in Fig. 9) in intervals e and f in response to the signal RE2 ((I) in Fig. 9) while the latter two are read out as a Y3 signal ((M) in Fig. 9) in intervals g and h in response to the signal RE3 ((J) in Fig. 9).

With regard to the FIFOs 2, 4 and 6, the C components are written in response to the signals CWE1, CWE2 and CWE3 ((F) in Fig. 9), and are read out in response to the signals RE1, RE2 and RE3 to yield C1, C2 and C3 signals ((N), (O) and (P) in Fig. 9). The thus acquired Y1, Y2 and Y3 signals and C1, C2 and C3 signals are selectively output by switches SW1 and SW2 to be a Y signal ((Q) in Fig. 9) and a C signal ((R) in Fig. 9). The Y signal and C signal are processed in the line-sequential reverse converter 24 shown in Fig. 4 to be restored to the original PR and PB signals ((S) and (T) in Fig. 9).

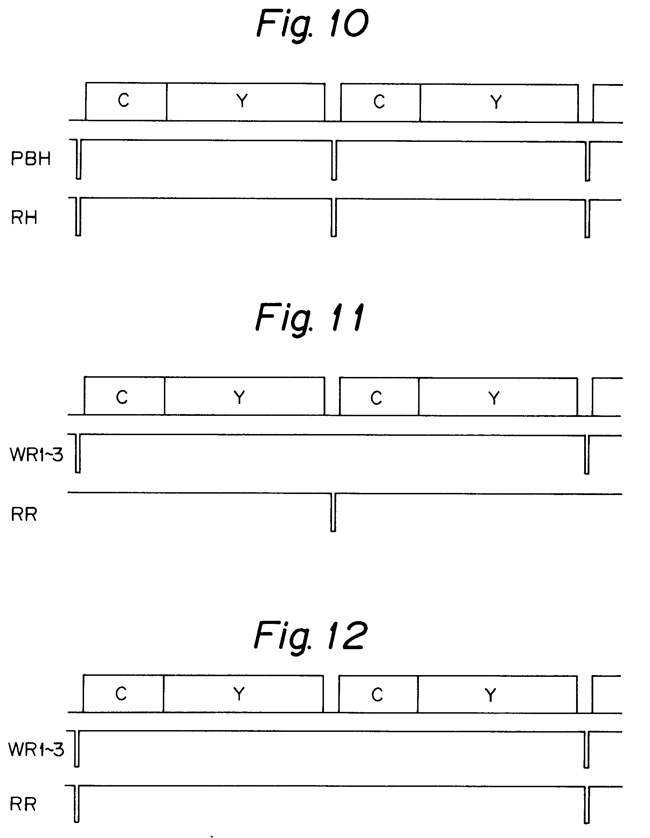

With the above arrangement, as is apparent from (D) and (G) in Fig. 9, the phase of each write reset pulse WR1, WR2 or WR3 should be shifted by three H lines from that of the read reset pulse RR. It is apparent from Figs. 7 and 8 that the pulses WR1, WR2 and WR3 are produced based on the playback horizontal sync signal PBH, and the pulse RR is produced based on the reference horizontal sync signal RH. Since the signals PBH and RH are in phase as shown in Fig. 10 as long as the spindle servo is properly controlled, the pulses WR1, WR2 and WR3 keep a phase shift corresponding to three H lines from the phase of the pulse RR.

When the player takes action associated with a jump operation, such as a search operation, the phase of the signal PBH may be disturbed greatly so that it does not match the phase of the pulse RH. As a result, the phase relationship between the pulses WR1, WR2 and WR3 and the pulse RR may be changed from the proper state as shown in Fig. 11 to an improper state as shown in Fig. 12. In that state, it is apparent from Fig. 13 that the signal Y41 written at an upper address is read out from the FIFO 1 in the interval d because the resetting of the read address by the pulse RR does not take place immediately after the interval a. Likewise, the signal Y44 written in the FIFO 1 in the interval b is read out in an interval i.

With regard to the FIFO 3, although the write address matches the read address between the intervals b and e, the signal Y45 written in the interval b will not be read out in the interval e, but will be read out in a later interval j due to the read clock higher than the write clock. The signal Y42 written in the interval a will be read out in the interval f.

With regard to the FIFO 5, although the write address matches the read address between the intervals b and g, the signal Y46 written in the interval b will be read out in the interval g because writing in the interval b precedes reading in the interval g.

Consequently, of the Y1, Y2 and Y3 signals ((K), (L) and (M) in Fig. 9) from the FIFOs 1, 3 and 5, the time axis of only the Y3 signal is deformed with respect to those of the Y1 and Y2 signals.

For the FIFOs 2, 4 and 6 too, writing and reading resets are effected by the pulses WR1, WR2, WR3 and RR, and the time axes of the C2 and C3 signals among the C1, C2 and C3 signals are deformed by the disturbance on the phase difference between the pulses WR1, WR2 and WR3 and the pulse RR.

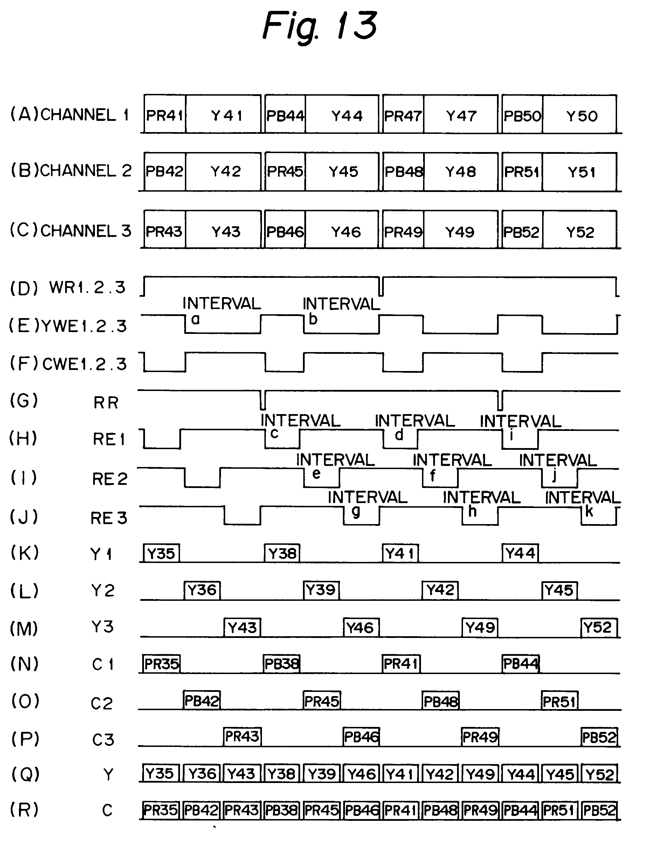

The Y3, C2 and C3 signals with the disturbed time axes disorder the Y and C signals acquired through the switches SW1 and SW2, as shown in (Q) and (R) in Fig. 13.

This disturbance is not restored even under the spindle servo control until the subsequent signal PBF is obtained. The time required for the recovery is equivalent to the maximum frame cycle (e.g., 30 ms), and disturbance on the reproduced image during that period cannot be ignored.

### Summary of the Invention

It is therefore an object of the present invention to provide an apparatus for reproducing a high definition color video signal, which is designed to shorten the time for disturbance on a reproduced image when the mode returns to a normal playback mode from a special playback mode.

To achieve this object, according to the present invention, there is provided a high-definition color video signal reproducing apparatus for reproducing a color video signal based on a channel signal acquired by playing a recording medium having channel signals recorded thereon, which are acquired by expanding time axes of one luminance signal and two color difference signals representing a single color video signal to acquire an expanded luminance signal and two expanded color difference signals, and then converting the expanded luminance signal and the expanded color difference signals into three channel signals consisting of composite horizontal lines having the two expanded color difference signals combined with the expanded luminance signal for each horizontal line while performing a line-sequential process on the two expanded color difference signals, the apparatus comprising:
a separating means for separating a horizontal sync signal and a frame sync signal as a playback horizontal sync signal and a playback frame sync signal from the reproduced channel signal;
a channel write signal generating means for generating a channel write signal in accordance with the playback horizontal sync signal and the playback frame sync signal;
a channel read signal generating means for generating a channel read signal based on the playback frame sync signal; and
a memory means for storing the expanded luminance signal and the expanded color difference signals subjected to the line-sequential process, included in the reproduced channel signal, in response to the channel write signal channel by channel and outputting the stored signals in response to the channel read signal, both in accordance with the playback horizontal sync signal and the playback frame sync signal,
whereby the channel read signal generating means also accepts the channel write signal to keep a phase difference between the channel write signal and the channel read signal to a predetermined value.

According to the reproducing apparatus with the above arrangement, one of previously prepared two timings is selected and a read reset pulse is generated at the selected timing.

### Brief Description of the Drawings

Fig. 1 is a block diagram of a recording apparatus that executes a system of recording/reproducing a high definition color video signal, on which system the present invention is premised;
Fig. 2 is a diagram illustrating one example of the structure of channel signals produced by the recording apparatus shown in Fig. 1;
Fig. 3 is a diagram illustrating another example of the structure of channel signals produced by the recording apparatus shown in Fig. 1;
Fig. 4 is a block diagram of a reproducing apparatus that executes a system of recording/reproducing a high definition color video signal, on which system the present invention is premised;
Fig. 5 is a block diagram showing a timing signal generating section of a time-axis compressing/converting circuit in the reproducing apparatus shown in Fig. 4;
Fig. 6 is a block diagram showing a memory section of the time-axis compressing/converting circuit in the reproducing apparatus shown in Fig. 4;
Fig. 7 is a block diagram showing a write timing signal generating section of the timing signal generating section shown in Fig. 5;
Fig. 8 is a block diagram showing a read timing signal generating section of the timing signal generating section shown in Fig. 5;
Fig. 9 is a time chart illustrating the operation of the reproducing apparatus shown in Figs. 5 and 6;
Fig. 10 is a time chart exemplifying the phase relationship between a playback horizontal sync pulse and a reference sync pulse in the reproducing apparatus shown in Figs. 5 and 6;
Fig. 11 is a time chart illustrating the proper phase relationship between a write reset pulse and a read reset pulse in the reproducing apparatus shown in Figs. 5 and 6;
Fig. 12 is a time chart illustrating the improper phase relationship between the write reset pulse and read reset pulse in the reproducing apparatus shown in Figs. 5 and 6;
Fig. 13 is a time chart of signals appearing in the reproducing apparatus shown in Figs. 5 and 6 when the write reset pulse and read reset pulse have the phase relationship shown in Fig. 12; and

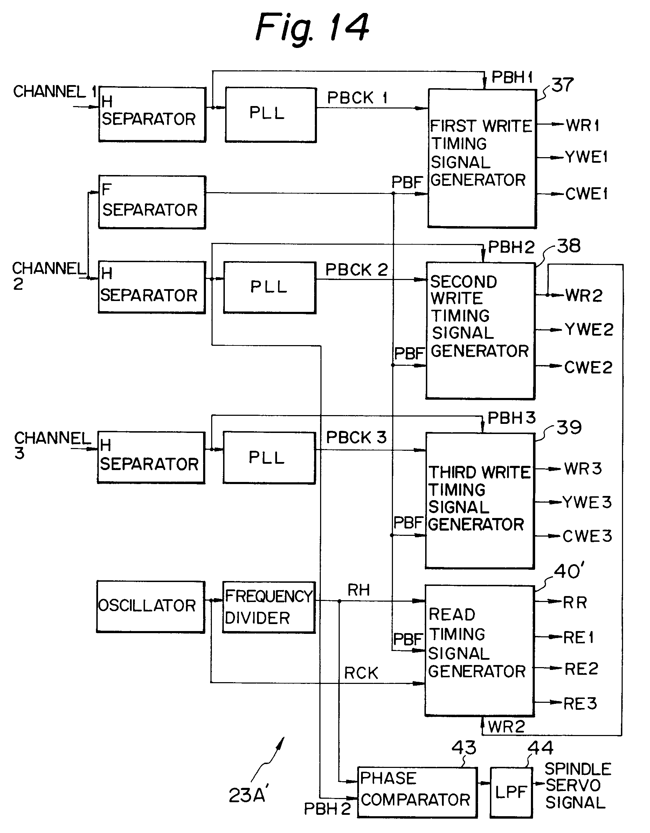

Fig. 14 is a block diagram showing the structure of a read timing signal generating section according to the present invention;

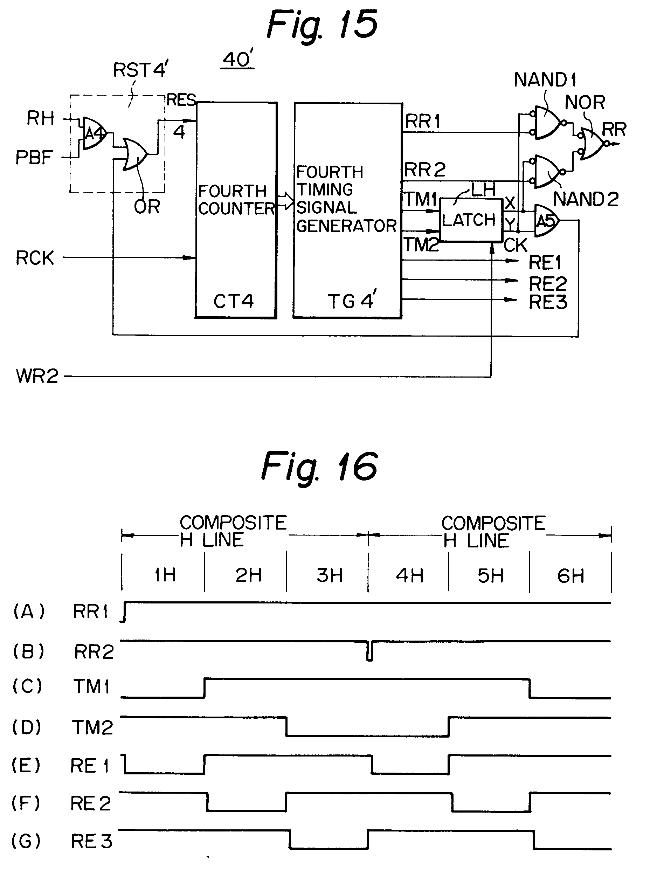

Fig. 15 is a block diagram exemplifying a specific circuit of the read timing signal generator in Fig. 14; and
Fig. 16 is a time chart illustrating the operation of the read timing signal generating section in Fig. 14.

### Detailed Description of the Preferred Embodiment

According to the present invention, the timing signal generating section 23A of the time-axis compressing/-converting circuit 23 is improved; the improved timing signal generating section 23A' is shown in Fig. 14. The circuit shown in Fig. 14 is almost the same as the one shown in Fig. 5, and the only difference lies in that a read timing signal generator 40' is designed to accept the write reset pulse WR2.

Fig. 15 exemplifies the specific circuit of the read timing signal generator 40'. In this read timing signal generator 40', a reset pulse generator RST4' for generating a reset pulse RES4 comprises an AND gate A4 for acquiring a logical product of the signals PH and PBH and an OR gate OR for outputting a logical sum of the output of the AND gate A4 and the output of an AND gate A5. The reset pulse generator RST4' produces one reset pulse RES4 synchronous with the signal RH per frame. The pulse RES4 is acquired when the output of the AND gate A5 is "1"; this will be described later. The fourth counter CT4, as in the read timing signal generator 40 shown in Fig. 8, has a depth to be able to count a playback clock RCK by two composite H lines, and clears the count value to be ready for the next count-up operation from zero every time it counts the clock RCK up to the number which corresponds to two composite H lines. The fourth timing signal generator TG4' acts in the same way as the fourth timing signal generator TG4 shown in Fig. 8 to produce signals RE1, RE2 and RE3 as shown in (E), (F) and (G) in Fig. 15, similar to those shown in (H), (I) and (J) in Fig. 9, and to produce pulses RR1 and RR2 having waveforms as shown in (A) and (B) in Fig. 15. The fourth timing signal generator TG4' produces a signal TM1, which becomes "0" in intervals 1H and 6H among intervals 1H to 6H acquired by equally dividing the length of two composite H lines by six and corresponding to six H lines, and becomes "1" in the other intervals 2H to 5H. The signal generator TG4' also produces a signal TM2, which becomes "0" in the intervals 3H and 4H and becomes "1" in the consecutive two intervals 1H and 2H as well as the intervals 5H and 6H. The signals TM1 and TM2 are input to a latch circuit LH which receives the pulse WR2 as a clock. The latch circuit LH holds the values of the signals TM1 and TM2 when the pulse WR2 changes its level to "1" from "0" and outputs them as an X output and a Y output. The X output becomes one input of each of a NAND gate NAND2 and the AND gate A5, while the Y output becomes one input of a NAND gate NAND1 and the other input of the AND gate A5. The pulses RR1 and RR2 are respectively supplied to the other inputs of the NAND gates NAND1 and NAND2. The outputs of the NAND gates NAND1 and NAND2 are supplied to a NOR gate NOR whose output becomes the read reset pulse RR.

The operation of the signal generator 40' in Fig. 15 will be described below.

In normal playback mode, a logical product of the signals PBF and RH is supplied as the pulse RES4 to the reset terminal of the fourth counter CT4 via the OR gate OR at the head of a frame. The fourth counter CT4 counts the clock RCK and sends count values for two composite H lines one by one in a circulative manner to the fourth timing signal generator TG4'. The fourth timing signal generator TG4' produces seven kinds of signals, RR1, RR2, TM1, TM2, RE1, RE2 and RE3, as mentioned above. The signals TM1 and TM2, which are latched at the rising of the pulse WR2, are determined by the count value of the fourth counter CT4 which is reset at the timing of the signal PBF as explained referring to Fig. 7. It is therefore apparent from Fig. 16 that, at the rising of the pulse WR2, the signal TM1 becomes "0" and the signal TM2 becomes "1", so that the X output of the latch circuit LH becomes "0" while the Y output becomes "1" at that timing.

Therefore, the NAND gate NAND1 is disabled and the NAND gate NAND2 is enabled, and the pulse RR2 is positioned in the center of the duration in which the signal TM2 becomes "0". Consequently, the pulse RR has a delay for three H lines to the pulse WR2. In this case, since the X output is "0" and the Y output is "1", the AND gate A5 is disabled so that the reset pulse generator RST4' will not be affected at all.

It is apparent from the above that the pulse RR is delayed by three H lines to the pulse WR2 at the head of a frame. Since the rotational phase of the spindle is maintained by the spindle servo operation based on the signals PBH and RH, the pulse WR2 appears every two composite H lines, the pulse RR2 output from the fourth timing signal generator TG4' also appears at an interval of two composite H lines, the pulse WR2 appears in the period where the signal TM1 is "0", causing the X output to be "0". As long as the spindle servo operation is stable, therefore, the pulse RR is always delayed by three H lines to the pulse WR2.

When the mode returns to the normal playback mode after special reproduction, such as searching or scanning, is executed, however, it is not determined where the pulse WR2 appears at the read timing until the head of a frame is reached, as described earlier. The following describes the operation for every possible position the pulse WR2 can take.

When the pulse WR2 appears in the period where the signal TM1 becomes "0", the X output becomes "0" and the Y output becomes "1" as mentioned above. As a result, the NAND gate NAND1 is disabled and the NAND gate NAND2 is enabled, permitting the pulse RR2 to be output as the pulse RR. As the pulse WR2 is located in the period where the signal TM1 becomes "0", the pulse RR is lagged by three lines to the pulse WR2. The AND gate A5 is kept disabled.

In the next case where the pulse WR2 appears in the period where the signal TM2 becomes "0", the X output becomes "1" and the Y output becomes "0", enabling the NAND gate NAND1 and disabling the NAND gate NAND2. As a result, the pulse RR1 is output from the NOR as the pulse RR. As the pulse WR2 is located in the period where the signal TM2 becomes "0", the pulse WR2 is also lagged by three lines to the pulse RR. Since both pulses WR2 and RR have an interval of two composite H lines, the pulse WR2 delayed by three lines to the pulse RR is equivalent to the pulse RR having a delay of three H lines to the pulse WR2. The time-axis conversion can be properly performed in this case too. The AND gate A5 is kept disabled.

In the final case where the pulse WR2 appears in the duration where the signals TM1 and TM2 are both "1", the X output becomes "1" and the Y output becomes "1", disabling both the NAND gates NAND1 and NAND2. Therefore, no pulse RR comes out from the NOR gate NOR4. In this case, the AND gate A5 is enabled for the first time, resetting the fourth counter CT4 through the reset pulse generator RST4'. Since the timing signals of the reading system are produced at the count value of that counter CT4, when the counter CT4 is reset, the counter CT4 keeps holding the timing start values, i.e., it keeps holding the state where the signal TM1 is "0" and the signal TM2 is "1". When the next pulse WR2 comes in this state, the X output becomes "0" and the Y output becomes "1", disabling the AND gate A5. Consequently, the counter CT4 comes out of the reset state to start counting the cock RCK. In addition, the NAND gate NAND1 becomes disabled and the NAND gate NAND2 becomes enabled, permitting the pulse RR2 to be output as the pulse RR from the NOR gate NOR.

Since the fourth timing signal generator TG4' starts sending the timing signal in response to the pulse WR2 coming immediately after the resetting of the counter, as described above, the pulse WR2 will always appear in the period where the signal TM1 is "0" from the next time. As the pulse RR is output in the middle of the period where the signal TM2 is "0", the pulse RR has a delay of three lines to the pulse WR2 in this case too, so that the time-axis conversion can properly be conducted.

As described above, in the reproducing apparatus embodying the present invention, when the mode returns to the normal playback mode from the special playback mode, whatever timing the pulse WR2 appears, the phase difference between the pulses RR and WR2 can spontaneously be set to an amount corresponding to three H lines. The proper image can be output without waiting for the head of a frame, thus shortening the time for the proper image from appearing after the mode returns to the normal playback mode from the special playback mode.

## Claims

1. A high-definition color video signal reproducing apparatus for reproducing a color video signal based on a channel signal acquired by playing a recording medium having channel signals recorded thereon, which are acquired by expanding time axes of one luminance signal and two color difference signals representing a single color video signal to acquire an expanded luminance signal and two expanded color difference signals, and then converting the expanded luminance signal and the expanded color difference signals into three channel signals consisting of composite horizontal lines having the two expanded color difference signals combined with the expanded luminance signal for each horizontal line while performing a line-sequential process on the two expanded color difference signals, said apparatus comprising:
a separating means for separating a horizontal sync signal and a frame sync signal as a playback horizontal sync signal and a playback frame sync signal from the reproduced channel signal;
a channel write signal generating means for generating a channel write signal in accordance with the playback horizontal sync signal and the playback frame sync signal;
a channel read signal generating means for generating a channel read signal based on the playback frame sync signal; and
a memory means for storing the expanded luminance signal and the expanded color difference signals subjected to the line-sequential process, included in the reproduced channel signal, in response to the channel write signal channel by channel and outputting the stored signals in response to the channel read signal, both in accordance with the playback horizontal sync signal and the playback frame sync signal,
whereby said channel read signal generating means also accepts said channel write signal to keep a phase difference between said channel write signal and said channel read signal to a predetermined value.
